# EUROPEAN PATENT SPECIFICATION

(11) **EP 0 626 314 B1**
(45) Date of publication and mention of the grant of the patent: **05.11.1997**
(21) Application number: 94201198.2
(22) Date of filing: 29.04.1994
(51) Int. Cl.: B65B 57/00, B29C 65/00

(54) **Safety frame for sealing a heat-sealable film in a packaging machine**
Sicherheitsrahmen zum Siegeln einer heisssiegelbaren Folie in einer Verpackungsmaschine
Câdre de sécurité pour le scellement d'un film thermo-soudable dans une machine d'emballage

(30) Priority: 06.05.1993 IT MI930379 U
(43) Date of publication of application: 30.11.1994
(73) Proprietor: MINIPACK-TORRE S.p.A., I-24044 Dalmine (Bergamo) (IT)
(72) Inventor: Torre, Francesco, I-24044 Dalmine (Bergamo) (IT)
(74) Representative: Faraggiana, Vittorio, Dr. Ing.

(56) References cited:
- DE-A- 2 520 475
- FR-A- 2 403 266

## Description

The present invention relates to a sealing frame the movements of which are executed in a safe manner.

Packaging machines are known in which provision is made for a sealing frame designed to join together the peripheral edges of two sheets made of a heat sealable-material between which the goods to be packaged are interposed. The sealing frame generally comprises a fixed and a movable portion facing each other, wherein the movable portion is moved by actuators so that the plastics film is clamped between said two portions and sealing of same is carried out. Machines are known, for example, in which the movable portion of the sealing frame is comprised of a dome-shaped covering for a cell carrying out heat-shrinkage of the plastics film, so that cutting, sealing and heat-shrinkage of the package can be executed simultaneously.

It will be recognized that when the frame (provided with a dome-shaped covering or not) is moved upwardly and downwardly automatically by a servo-mechanism, the unwary introduction of one hand into the operating field of the machine may be very dangerous.

DE-2.520.475 discloses a sealing frame in which a protection element surrounds the movable portion. The protection element is resiliently supported on the movable portion. Upon mutual movement between the movable portion and the protection (for example, when the hand is introduced in the operating field) a switch is actuated and the movement of the movable portion is stopped.

The general object of the present invention is to obviate the above mentioned drawback by providing a sealing frame provided with a mechanical safety linkage for carrying out movements of same, capable of avoiding the blades closing when an obstacle whatever is encountered, for example the operator's hands.

In view of the above object, in accordance with the invention, a sealing frame for a heat-sealable film has been devised which comprises a fixed and a movable sealing portion, the movable portion being articulated so that it can be moved close to the fixed portion by a movement actuator for sealing a film between the sealing portions, characterized in that a yieldable connecting device is interposed between the movement actuator and movable portion, which device comprises one element connected to the actuator and a second element connected to the movable portion, said first and second elements being hinged on each other so that they mutually move on operation of the actuator at least in a direction in which the movable portion moves close to the fixed portion, the mutual movement taking place against the action of a spring disposed between the first and second elements for transmitting an operating force between the actuator and movable portion, an electric switch for stopping the actuator movement in said moving-close direction being interposed between said first and second elements, said switch being operated when the mutual movement exceeds a predetermined amount which is established as an indication that a transmission force of the spring exceeds a predetermined value, which means stopping of movement in a moving-close direction in the presence of obstacles to said movement.

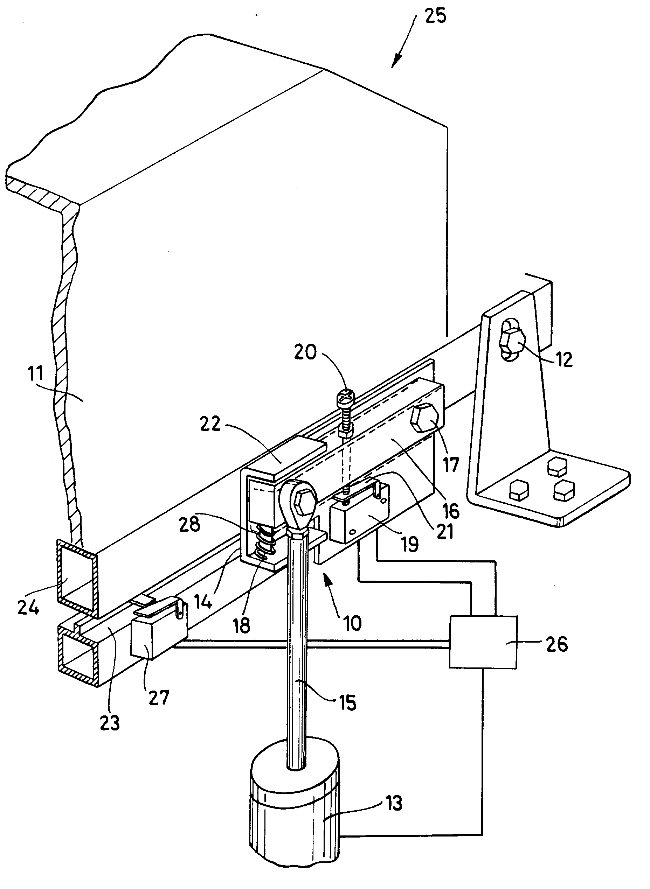

For better explaining the innovatory principles of the present invention and the advantages it offers over the known art, the description of a possible exemplificative embodiment applying such principles will be given hereinafter with the aid of the accompaying drawing in which the only figure is a fragmentary diagrammatic view of a sealing frame generally identified by reference numeral 25.

The sealing frame 25 comprises a fixed portion 23 and a movable portion 24 carrying sealing blades for peripherally sealing a package formed of a pair of superposed plastics sheets containing a product to be packaged. The movable portion is articulated, so that it is movable by an actuator 13 between a raised position for introduction of the wrapped product into the frame and a lowered position juxtaposed to the fixed portion for peripheral sealing of the package.

For example, the movable portion (which may also comprise a dome 11 for closing a cell carrying out hot air heat-shrinkage of the sealed package) is pivoted on an axis 12.

Up to here a substantially known machine has been described; said machine is easily imaginable by any technician and therefore is not further described. The actuator 13 may comprise a reduction gear provided with a crank and connecting rod, a pneumatic device, etc.

In an innovatory manner, a yieldable connecting device 10 is interposed between the movable arm 15 of the actuator and movable portion of the frame. In particular, the innovatory connecting device comprises a bracket or plate 14, integral with the portion to be moved, to which an oscillating lever 16 pivoted at one end on an axis 17, is connected. Pivotally mounted to the opposite end of the lever 16 is the actuator arm 15. A spring 18 is disposed between the bracket 14 and lever 16, which spring reacts in the opposite direction with respect to the direction of the frame closing movement. In particular, the spring will react so as to urge the lever 16 upwardly.

The bracket 14 also supports a switch 19 the driving key 21 of which is operated when the lever 16 carries out a predetermined relative movement with respect to the bracket.

The amount of the relative movement causing operation of the switch can be regulated by means of a screw 20 passing through the lever and acting on the switch.

During its upward movement the lever abuts against an upper end-of-stroke console 22 projecting from the bracket, and the actuator movement is integrally transmitted to the dome.

During the downward movement of the actuator arm, the lever 16 compresses the spring that transmits to the dome the force necessary to its descent movement.

The spring 18 is such selected that its force or stiffness is capable of transmitting a sufficient reaction to the dome movement under normal conditions without the lever descent reaching and operating the switch driving key 21.

If the lowering movement is hindered, the spring is further compressed, the screw 20 tail reaches the switch driving key 21 and the switch is therefore operated. As a technician can easily understand, the switch may be connected to a device 26 powering and controlling the actuator movement so that said actuator is immediately stopped and optionally the movement of same is reversed.

In order to enable the frame to produce the necessary sealing pressure, without the safety contrivance being activated, a second switch 27 is provided for detecting reaching of the approached or closed position between movable and fixed portions.

When the frame reaches its closed position, the switch 27 disables the switch 19, so that on stopping of the fixed portion against the movable portion, the switch 19 cannot inopportunely cause opening of the frame.

In order to avoid the sealing pressure being completely discharged through the spring thereby damaging said spring, a limit stopper is provided for stopping movement of the lever 16 after said lever has carried out its movement for operating the switch 19. For example the limit stopper is embodied by a pin 28 coaxial with the spring and resting on the bracket 14 when the spring compression exceeds the amount necessary for operation of the switch 19.

At this point it is clear that the intended purposes have been achieved by providing a safety frame the closure of which is prevented when an obstacle restrains movement of the movable portion.

Of course, if the frame to be moved has a good balancing, the descent takes place freely or almost freely and the spring can be set so that its compression takes place at a relatively low pressure, the device intervention therefore occurring even when the smallest obstacle is present.

Usually hot blades are present only on the fixed portion, the movable portion merely acting as a locating abutment.

Therefore if the operator knock with his hands against the movable portion, this is not dangeours if the movement is stopped before the movable portion drags along the hands against the fixed portion.

Obviously the above description applying the innovatory principles of the invention is given for purposes of illustration only and therefore must not be considered as a limitation of the scope of the invention as defined in the claims.

For example, the switch may be of a type operated on moving the lever away therefrom instead of on moving said lever close thereto, and in this case it will be located uppermost relative to said lever.

## Claims

1. A sealing frame (25) for a heat-sealable film comprising a fixed sealing portion (23) and a movable sealing portion (24), the movable portion being articulated so that it can be moved close to the fixed portion by a movement actuator (13) for sealing a film between the sealing portions (23, 24), characterized in that a yieldable connecting device (10) is interposed between the movement actuator (13) and movable portion, which device (10) comprises one element (16) connected to the actuator and a second element (14) connected to the movable portion (24), said first and second elements being hinged on each other so that they mutually move on operation of the actuator at least in a direction in which the movable portion moves close to the fixed portion, the mutual movement taking place against the action of a spring (18) disposed between the first and second elements for transmitting an operating force between the actuator and movable portion (24), an electric switch (19) for stopping the actuator (13) movement in said moving-close direction being interposed between said first and second elements, said switch being operated when the mutual movement exceeds a predetermined amount which is established as an indication that a transmission force of the spring exceeds a predetermined value, which means stopping of movement in a moving-close direction in the presence of obstacles to said movement.

2. A frame according to claim 1, characterized in that the second element (14) is integral with the movable portion (24) and the first element is a lever (16) pivoted at one end thereof on the second element and pivotally connected at the other end to the actuator, which end reacts on the spring (18).

3. A frame according to claim 2, characterized in that the second element is in the form of a supporting plate (14) to which the switch (19) body is fastened, a switch driving key (21) being disposed along the path of an actuating element (20) supported by the lever (16) for pressing the switch driving key (21) on movement of the lever a predetermined amount about its pivot point.

4. A frame according to claim 3, characterized in that the actuating element (20) is embodied by the tail of a screw threadedly passing through the lever (16) in the direction of the lever movement towards the switch driving key (21), so that it carries out the adjustment of the predetermined amount of movement necessary for the switch operation.

5. A frame according to claim 2, characterized in that the second element (14) comprises a first limit stopper (22) for stopping movement of the first element (16) in the direction opposite to that in which the fixed and movable portions move close to each other.

6. A frame according to claim 1, characterized in that the movable portion (24) is pivoted according to a rotational axis, the actuator being a rectilinear actuator the connection of which enables the movable portion to rotate between a first and a second angular position.

7. A frame according to claim 1, characterized in that the movable portion (24) defines a peripheral edge of a dome-shaped covering (11) for a cell carrying out heat-shrinkage in a packaging machine.

8. A frame according to claim 1, characterized in that it comprises another switch (27) for detecting the frame closure, said second switch inhibiting the stopping effect produced by the first switch (19) on detection that a position close to the frame closure position has been reached.

9. A frame according to claim 1, characterized in that it comprises a second limit stopper (28) stopping the mutual movement between the first and second elements, when the predetermined amount has been exceeded.

10. A frame according to claim 9, characterized in that the second limit stopper (28) is a pin coaxial with the spring (18).

## Patentansprüche

1. Siegelrahmen (25) für einen heiß-siegelbaren Film mit einem feststehenden Siegelabschnitt (23) und einem bewegbaren Siegelabschnitt (24), wobei der bewegbare Abschnitt so angelenkt ist, daß er nahe zu dem feststehenden Abschnitt mittels einer Bewegungs-Betätigungsvorrichtung (13) zum Siegeln eines Films zwischen den Siegelabschnitten (23, 24) bewegt werden kann, dadurch gekennzeichnet, daß eine nachgebbare Verbindungsvorrichtung (10) zwischen der Bewegungs-Betätigungsvorrichtung (13) und einem bewegbaren Abschnitt eingesetzt ist, wobei die Vorrichtung (10) ein mit der Betätigungsvorrichtung verbundenes Element (16) und ein mit dem bewegbaren Abschnitt (24) verbundenes zweites Element (14) aufweist und das erste und das zweite Element aneinander scharnierartig angelenkt sind, so daß sie sich beim Betrieb der Betätigungsvorrichtung wechselseitig zumindest in einer Richtung bewegen, in welcher sich der bewegbare Abschnitt nahe zu dem feststehenden Abschnitt bewegt, wobei die wechselseitige Bewegung gegen die Wirkung einer Feder (18) stattfindet, die zwischen dem ersten und dem zweiten Element angeordnet ist, um eine Betriebskraft zwischen der Betätigungsvorrichtung und dem bewegbaren Abschnitt (24) zu übertragen, wobei ein elektrischer Schalter (19) zum Stoppen der Bewegung der Betätigungsvorrichtung (13) in der Heranbewegungsrichtung zwischen dem ersten und dem zweiten Element eingesetzt ist, wobei der Schalter betätigt wird, wenn die wechselseitige Bewegung einen vorbestimmten Betrag überschreitet, der als Anzeige dafür, daß eine Übertragungskraft der Feder einen vorbestimmten Wert übersteigt, festgelegt wird, was ein Anhalten der Bewegung in einer Heranbewegungsrichtung bei Vorhandensein von Hindernissen für diese Bewegung bedeutet.

2. Rahmen nach Anspruch 1, dadurch gekennzeichnet, daß das zweite Element (14) einstückig mit dem bewegbaren Abschnitt (24) ist und das erste Element ein Hebel (16) ist, der an einem Ende davon an dem zweiten Element schwenkbar ist und an dem anderen Ende mit der Betätigungsvorrichtung schwenkbar verbunden ist, wobei dieses Ende auf die Feder (18) reagiert.

3. Rahmen nach Anspruch 2, dadurch gekennzeichnet, daß das zweite Element in Form einer Auflageplatte (14) vorliegt, an welcher das Schaltergehäuse (19) befestigt ist, wobei ein Schalterantriebsschlüssel (21) entlang dem Weg eines Betätigungselements (20) angeordnet ist, das durch den Hebel (16) getragen wird, um den Schalterantriebsschlüssel (21) bei der Bewegung des Hebels um einen vorbestimmten Betrag um seinen Drehpunkt herumzudrücken.

4. Rahmen nach Anspruch 3, dadurch gekennzeichnet, daß das Betätigungselement (20) durch den Endabschnitt einer Schraube gebildet wird, die gewindeartig durch den Hebel (16) in der Richtung der Hebelbewegung zu dem Schalterantriebsschlüssel (21) hindurchtritt, so daß es die für den Schalterbetrieb notwendige Einstellung des vorbestimmten Bewegungsbetrages ausübt.

5. Rahmen nach Anspruch 2, dadurch gekennzeichnet, daß das zweite Element (14) eine erste Grenzstoppvorrichtung (22) zum Stoppen der Bewegung des ersten Elements (16) in der Richtung entgegengesetzt zu derjenigen, in welcher sich der feststehende und der bewegbare Abschnitt nahe zueinander bewegen, aufweist.

6. Rahmen nach Anspruch 1, dadurch gekennzeichnet, daß der bewegbare Abschnitt (24) entlang einer Drehachse schwenkbar ist, wobei die Betätigungsvorrichtung eine geradlinige Betätigungsvorrichtung ist, deren Verbindung es dem bewegbaren Abschnitt ermöglicht, sich zwischen einer ersten und einer zweiten Winkelposition zu drehen.

7. Rahmen nach Anspruch 1, dadurch gekennzeichnet, daß der bewegbare Abschnitt (24) eine Randkante einer kuppelförmigen Abdeckung (11) für eine Zelle festlegt, die eine Hitzeschrumpfung in einer Verpackungsmaschine durchführt.

8. Rahmen nach Anspruch 1, dadurch gekennzeichnet, daß er einen weiteren Schalter (27) zum Erfassen des Schließens des Rahmens aufweist, wobei der zweite Schalter die durch den ersten Schalter (19) erzeugte Stoppwirkung hemmt, wenn erfaßt wird, daß eine Position nahe der Rahmenschließposition erreicht worden ist.

9. Rahmen nach Anspruch 1, dadurch gekennzeichnet, daß er eine zweite Grenzstoppvorrichtung (28) aufweist, welche die wechselseitige Bewegung zwischen dem ersten und zweiten Element stoppt, wenn der vorbestimmte Betrag überschritten worden ist.

10. Rahmen nach Anspruch 9, dadurch gekennzeichnet, daß die zweite Stoppvorrichtung (28) ein mit der Feder (18) koaxialer Zapfen ist.

## Revendications

1. Cadre de scellement (25) destiné à un film thermosoudable comprenant une portion de scellement fixe (23) et une portion de scellement mobile (24), la portion mobile étant articulée de façon à pouvoir être déplacée à proximité de la portion fixe par un organe d'actionnement de mouvement (13) pour sceller un film entre les portions de scellement (23, 24), caractérisé en ce qu'un dispositif de raccordement élastique (10) est intercalé entre l'organe d'actionnement de mouvement (13) et une position mobile, lequel dispositif (10) comprend un élément (16) raccordé à l'organe d'actionnement et un second élément (14) raccordé à la portion mobile (24), ces premier et second éléments étant articulés entre eux de façon à se déplacer l'un par rapport à l'autre lors du fonctionnement de l'organe d'actionnement au moins dans une direction dans laquelle la portion mobile se déplace à proximité de la portion fixe, le mouvement l'un par rapport à l'autre s'effectuant en opposition à l'action d'un ressort (18) disposé entre les premier et second éléments pour transmettre une force opérante entre l'organe d'actionnement et la portion mobile (24), un commutateur électrique (19) pour arrêter le mouvement de l'organe d'actionnement (13) dans une direction de déplacement de proximité étant intercalé entre les premier et second éléments, ce commutateur étant actionné lorsque le mouvement réciproque dépasse une valeur prédéterminée qui est établie comme indication qu'une force de transmission du ressort dépasse une valeur prédéterminée, ce qui signifie l'arrêt du mouvement dans une direction de déplacement de proximité, en présence d'obstacles à ce mouvement.

2. Cadre selon la revendication 1, caractérisé en ce que le second élément (14) est solidaire de la portion mobile (24) et le premier élément est un levier (16) mis en pivotement sur une de ses extrémités sur le second élément et raccordé de façon pivotante à l'autre extrémité de l'organe d'actionnement, laquelle extrémité réagit sur le ressort (18).

3. Cadre selon la revendication 2, caractérisé en ce que le second élément est sous forme d'une plaque de support (14) sur laquelle est fixé le corps de commutateur (19), une clé (21) pour la commande du commutateur étant disposée le long du trajet de l'élément d'actionnement (20) supporté par le levier (16) pour comprimer la clé de commande de commutateur (21) lors du mouvement du levier dans une ampleur prédéterminée autour de son point de pivotement.

4. Cadre selon la revendication 3, caractérisé en ce que l'organe d'actionnement (20) se présente sous la forme de la queue d'une vis traversant par vissage le levier (16) dans une direction du mouvement de levier en direction de la clé de commande de commutateur (21) de façon à effectuer le réglage de la quantité prédéterminée de mouvement nécessaire pour le fonctionnement du commutateur.

5. Cadre selon la revendication 2, caractérisé en ce que le second élément (14) comprend un premier contact de fin de course (22) pour arrêter le mouvement du premier élément (16) dans la direction opposée à celle où les portions fixe et mobile se déplacent à proximité l'une de l'autre.

6. Cadre selon la revendication 1, caractérisé en ce que la portion mobile (24) pivote selon un axe de rotation, l'organe d'actionnement étant un organe d'actionnement rectiligne dont le raccordement permet la rotation de la portion mobile entre une première et une seconde position angulaire.

7. Cadre selon la revendication 1, caractérisé en ce que la portion mobile (24) définit un bord périphérique d'un revêtement de forme bombée (11) pour une cellule effectuant l'opération de thermosoudage dans une machine d'emballage.

8. Cadre selon la revendication 1, caractérisé en ce qu'il comprend un autre commutateur (27) pour détecter la fermeture de cadre, ce second commutateur empêchant l'effet de fermeture produit par le premier commutateur (19) lorsqu'il a été détecté qu'une position proche de la position de fermeture de cadre a été atteinte.

9. Cadre selon la revendication 1, caractérisé en ce qu'il comprend un second contact de fin de course (28) arrêtant le mouvement réciproque des premier et second éléments lorsque l'ampleur prédéterminée du mouvement a été dépassée.

10. Cadre selon la revendication 9, caractérisé en ce que le second contact de fin de course (28) est une broche coaxiale du ressort (18).
